# EUROPEAN PATENT SPECIFICATION

(11) **EP 1 424 795 B1**
(45) Date of publication and mention of the grant of the patent: **17.10.2007**
(21) Application number: 03015980.0
(22) Date of filing: 14.07.2003
(51) Int. Cl.: H04B 10/155, H04B 10/18

(54) **Optical transmission system using optical phase modulator**
Optisches Übertragungssystem unter Verwendung eines optischen Phasenmodulators
Système de transmission optique utilisant un modulateur de phase optique

(30) Priority: 29.11.2002 KR 2002075367
(43) Date of publication of application: 02.06.2004
(73) Proprietor: SAMSUNG ELECTRONICS CO., LTD., Suwon-City, Kyungki-do (KR)
(72) Inventor: Lee, Gyu-Woong, c/o Samsung Electronics Co., Ltd., Suwon-City, Kyungki-do (KR); Kang, Byung-Chang, c/o Samsung Elect. Co., Ltd., Suwon-City, Kyungki-do (KR); Lee, Han-Lim, c/o Samsung Elect. Co., Ltd., Suwon-City, Kyungki-do (KR); Hwang, Seong-Taek, c/oSamsung Elect. Co., Ltd., Suwon-City, Kyungki-do (KR)
(74) Representative: Grünecker, Kinkeldey, Stockmair & Schwanhäusser Anwaltssozietät

(56) References cited:
- EP-A- 0 977 382
- EP-A- 1 411 656
- EP-A- 1 422 843

## Description

The present invention relates to an optical transmission system, and more particularly to an optical transmission system that can improve the transmission quality and provide a high-speed transmission using an optical phase modulator.

In general, a DWDM (Dense-Wavelength-Division-Multiplexing) optical transmission system has an excellent communication efficiency as it can transmit an optical signal having multiple channels with different wavelengths through a single optical fiber. In addition, the DWDM system is capable of transmitting optical signals regardless of the transmission speed thereof. As such, the DWDM systems have been widely utilized in ultra-high speed internet networks. However, a rapid increase in the data traffic and a demand for faster data transmission of more than 40 Gbps tend to cause severe interference and distortion between the channels (i.e., a channel interval less than 50GHz) when the light intensity is modulated using the conventional non-return-to-zero (NRZ) method, thereby imposing a restriction in the enlargement of transmission capacity.

The transmission distance is restricted especially in the high-speed transmission of more than 10 Gbps as a direct current (DC) frequency component of the conventional binary NRZ transmission signal and a high frequency component spread, which occurs during the modulation process, cause non-linearity and dispersion when the transmission of the binary NRZ signal propagates in an optical fiber medium. In this regards, an optical duobinary transmission technology that can improve the bit spectral efficiency has been introduced as a means to enable an effective use of the limited optical fiber bandwidth. An advantage of the duobinary transmission is that the transmission spectrum is reduced greatly in comparison to the general binary transmission.

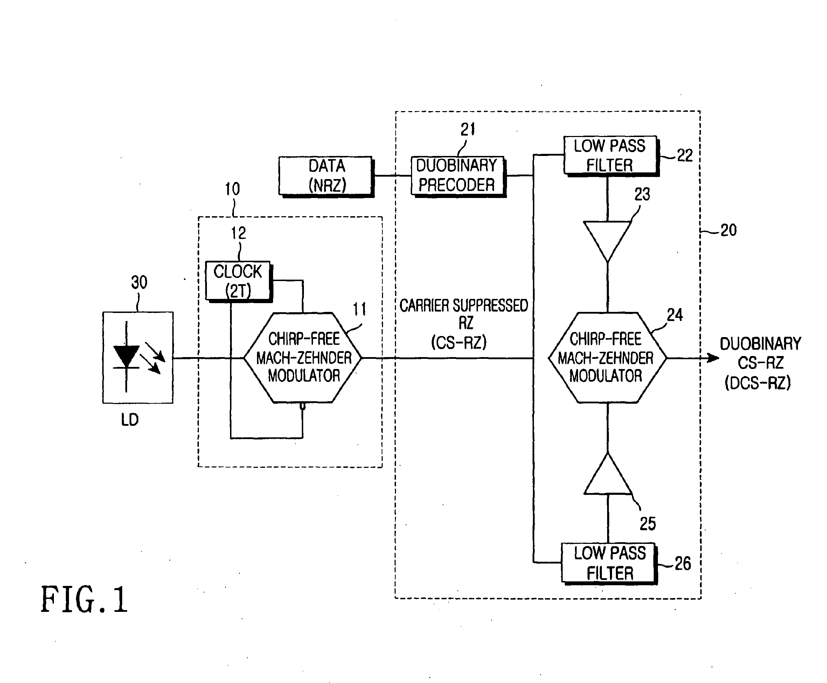

FIG 1 is a block diagram showing the construction of a conventional duobinary carrier suppressed, Return-to-Zero (hereinafter, referred to as "DCS-RZ") generating transmitter. As shown, the conventional DCS-RZ generating transmitter includes a carrier suppressed RZ unit 10 and a duobinary modulation unit 20.

In the carrier suppressed RZ unit 10, a clock 12 applies a clock signal having a cycle of 2T to an input of a chirp-free interferometer type optical-intensity-modulator 11 to generate a carrier suppressed RZ signal.

In the duobinary modulation unit 20, NRZ data are converted to a 3-level electrical signal by a duobinary precoder 21 and an electrical low pass filter 22. The 3-level electrical signal is amplified by a modulator driver amplifier 23 and then used to drive a chirp-free Mach-Zehnder modulator 24.

The Mach-Zehnder interferometer type light-intensity-modulators as described above can be classified into two types: a Z-cut structure and an X-cut structure according their arm structures. The Z-cut structured Mach-Zehnder interferometer type light-intensity-modulator has dual arms and is driven when 3-level signals are applied through the dual arms, where as the X-cut structured Mach-Zehnder interferometer type light-intensity-modulator has a single arm and is driven when a 3-level signal is applied through the single arm.

FIG. 1 shows a Z-cut structured Mach-Zehnder interferometer type light-intensity-modulator having dual arms, each having an electrical low pass filter 22 or 26 and a modulator driving amplifier 23 or 25, so that the 3-level electric signal can be applied to each arm.

FIG. 2 shows an X-cut structured Mach-Zehnder interferometer type light-intensity-modulator having a single arm, which includes an electrical low pass filter 22 and a modulator driving amplifier 23, so that the 3-level electric signal can be applied to the single arm.

FIG. 3A is a graph showing the output signals of the light-intensity-modulators of FIGs. 1 and 2, and FIG 3B is a graph showing the spectral characteristics of the output signals. As apparent from the graph, the spectrum of the modulated signals shows the frequency components of modulated signals placed at two locations only, which are upper and lower sides of the carrier frequency without any frequency component of the carrier itself.

However, in the conventional DCS-RZ systems as described above, when the carrier suppressed RZ signal is converted to the duobinary signal again, the 3-level electric signal is generated by the low-pass-filter. Accordingly, any difference in the characteristics of the output optical signals caused by lengths of a pseudo random bit sequence (PRBS) and the dependency of transmission quality on the filtering characteristic of the low pass filters may pose a critical problem in the system. This problem occurs both in the Z-cut structured system and the X-cut structured system, and this reliance of the signal pattern imposes restrictions in the transmission of optical signals.

Patent application EP 1 411 656, published on 21.04.2004 claiming the priority date of 16.10.2002, discloses an optical duobinary carrier-suppressed RZ transmission system, which differs from the main embodiment of the present invention in that a Mach-Zehnder optical intensity modulator is used in the duobinary signal generator of said document.

Accordingly, the present invention has been made to solve the above-mentioned problems occurring in the prior art and provides additional advantages, by providing an optical transmission system using an optical phase modulator, which employs a duobinary technique using a phase modulator, so as to overcome the dependency of the transmission quality on the filtering characteristic and the bit pattern as in the conventional duobinary transmission system, thereby improving the non-linearity and dispersion characteristics of the NRZ transmission of more than 10 Gbps.

The present invention relates to a carrier suppressed RZ (Return-to-Zero) generating transmitter capable of generating DCS-RZ, by utilizing a new duobinary optical transmission technique that can be employed in a DWDM optical transmission system.

The invention concerns an optical transmission system according to claim 1.

The above features and advantages of the present invention will be more apparent from the following detailed description taken in conjunction with the accompanying drawings, in which:
FIG. 1 is a block diagram showing the construction of a conventional DCS-RZ system;

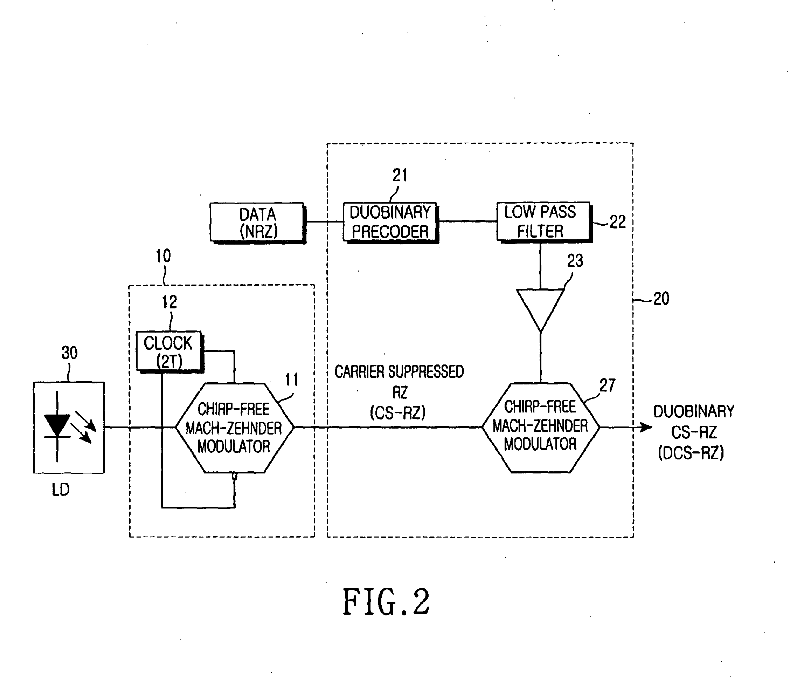

FIG. 2 is a block diagram showing the construction of another conventional DCS-RZ system;

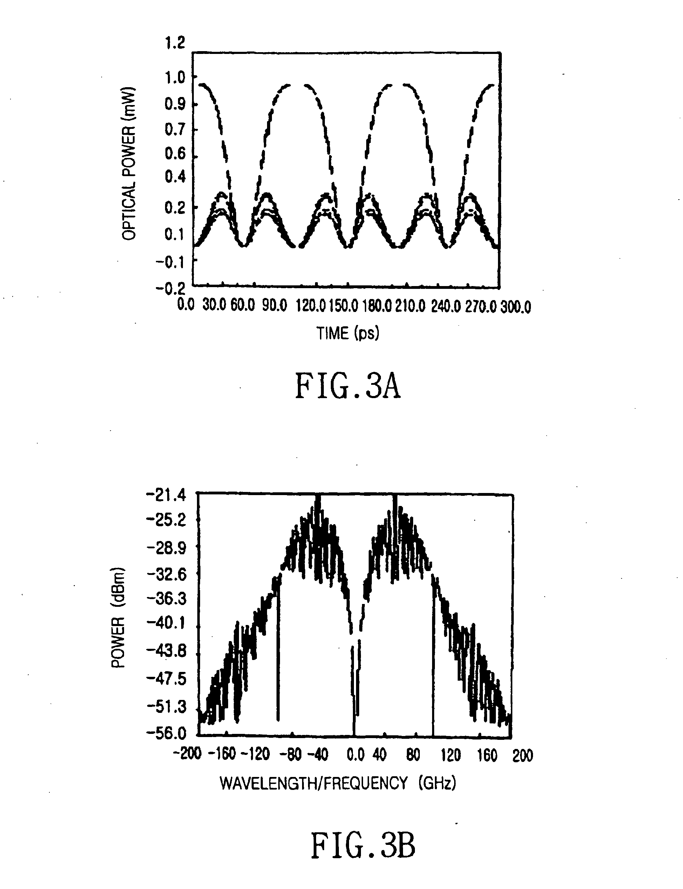

FIGs. 3 A and 3B are graphs showing the output signals and the spectral characteristics of the output signals of the light-intensity-modulators shown in FIGs. 1 and 2;

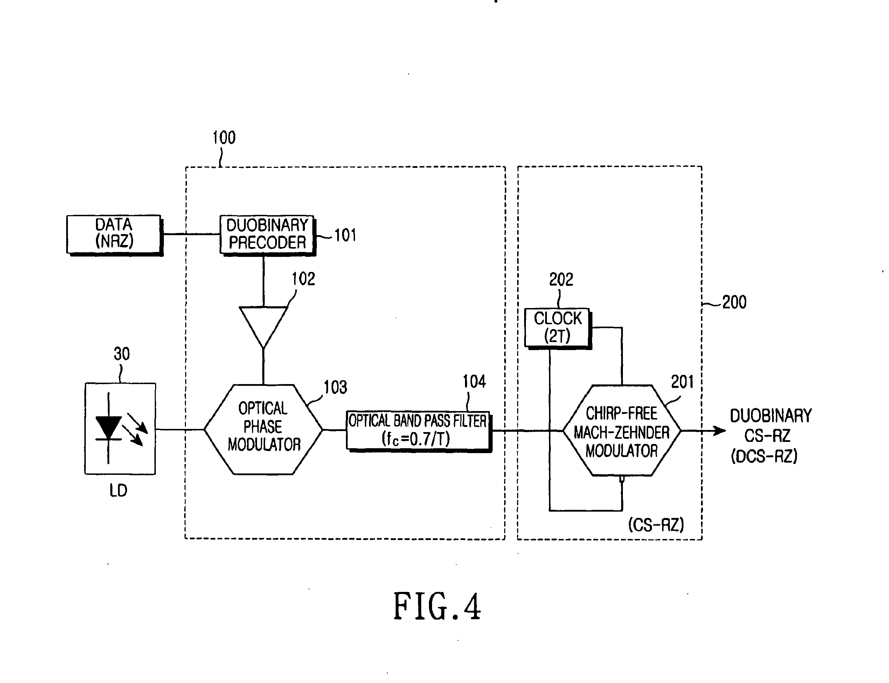

FIG. 4 is a block diagram showing the construction of an optical transmission system employing an optical phase modulator according to an embodiment of the present invention;

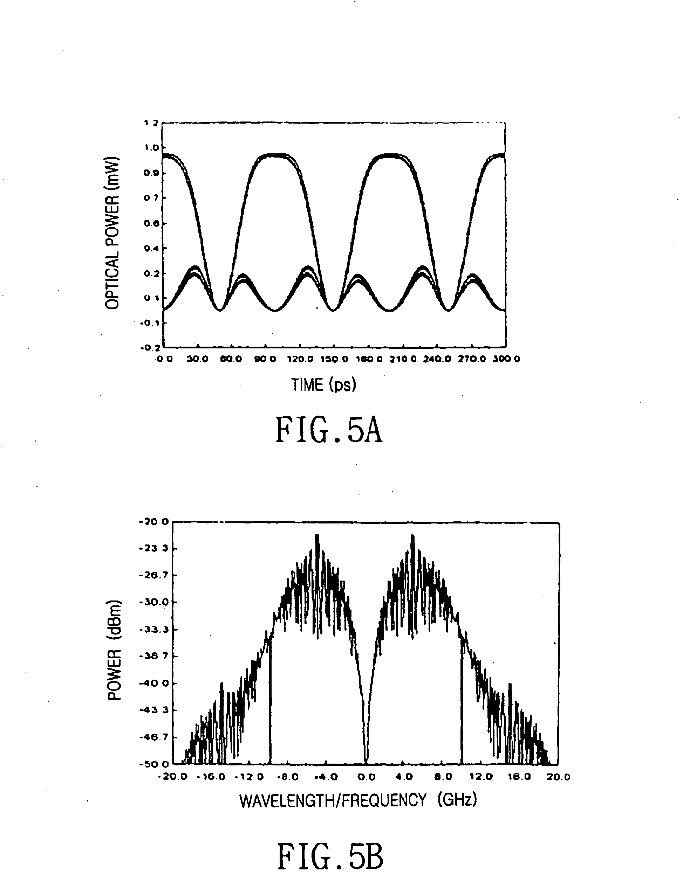

FIGs. 5A and 5B are graphs illustrating the output characteristics of an optical transmission system using an optical phase modulator according to the present invention; and,

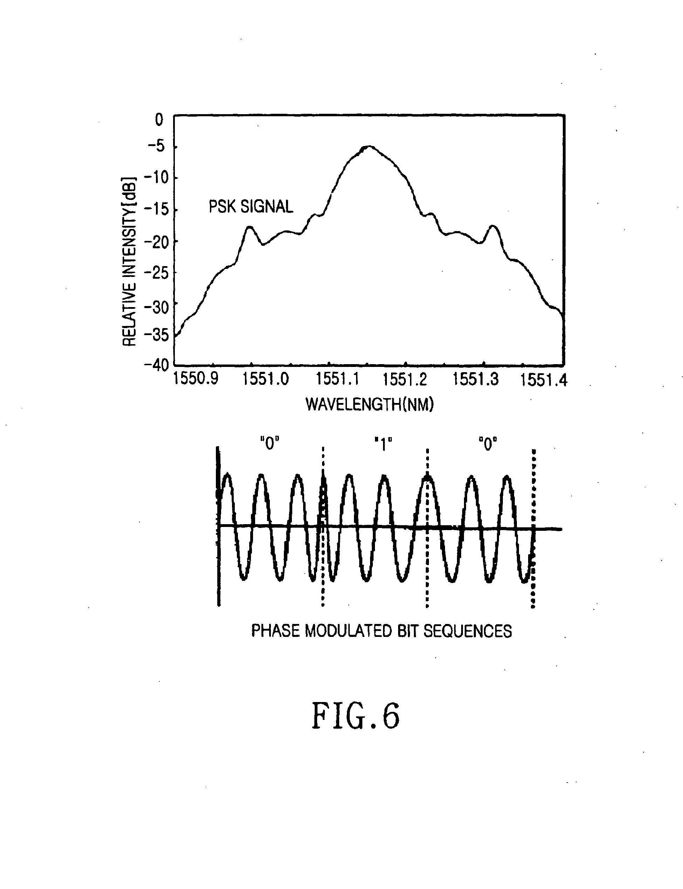

FIGs. 6 to 10 are graphs showing the operation process of the DCS-RZ optical transmission system according to the present invention.

Hereinafter, preferred embodiments of the present invention will be described with reference to the accompanying drawings. For the purposes of clarity and simplicity, a detailed description of known functions and configurations incorporated herein will be omitted as it may make the subject matter of the present invention rather unclear.

FIG. 4 is a block diagram showing the construction of an optical transmission system employing an optical phase modulator according to an embodiment of the present invention. As shown in FIG 4, the optical transmission system employing an optical phase modulator according to the embodiment of the present invention includes a duobinary modulating section 100 for generating a duobinary signal and a carrier suppressed RZ section 200 for generating a carrier suppressed RZ. According to the teachings of the present invention, the duobinary modulating section 100 and the carrier suppressed RZ section 200 exhibit the same characteristics even when their positions are interchanged.

In operation, NRZ data are encoded by a duobinary precoder 101, and the encoded signal is amplified by a driving amplifier 102 and then phase-modulated by a phase modulator 103. The phase modulator 103 can adjust a degree of the phase modulation by adjusting the modulation index, which indicates the degree of phase modulation.

Thereafter, the optical signal whose phase has been modulated in the optical phase modulator 103 passes through an optical band pass filter 104 having a bit rate of 0.7/T. The optical signal is modulated into a duobinary signal while passing through the optical band pass filter 104, which is then outputted. Meanwhile, the optical band pass filter 104 filters the optical signal while adjusting the bandwidth of the signal frequency within a range, which allows the signal to be transmitted without distortion.

Finally, the modulated duobinary optical signal is incident to the chirp-free Mach-Zehnder modulator 201 of the carrier suppressed RZ section 200, and a clock signal 202 having a cycle of 2T is applied to the chirp-free Mach-Zehnder modulator 201, so as to generate a carrier suppressed RZ signal.

FIGs. 5A and 5B are graphs illustrating the output characteristics of an optical transmission system using an optical phase modulator according to the embodiment of the present invention. In particular, FIG 5A shows an optical power (mW) according to time (ps), and FIG 5B shows an optical power (dBm) according to wavelength/frequency (GHz), each of which represents an output of the optical transmission system using an optical phase modulator 103.

FIGs. 6 to 10 are graphs showing the operation process of the optical transmission system according to the present invention.

Referring back to FIG. 4, an optical carrier generated in the semiconductor laser 30 is applied to the optical phase modulator 103. Further, Non-Return-to-Zero (NRZ) data are applied through the duobinary precoder 101 and then amplified in the driving amplifier 102. The amplified binary data having information of '0' or '1' have an optical phase changing according to the applied NRZ bit. In other words, the NRZ data are amplified through the duobinary precoder 101 and the driving amplifier 102 and then phase-modulated by the optical phase modulator 103.

FIG. 6 shows the phase-modulated NRZ data, in which the inputted bit of '0' or '1' has been modulated by the optical phase modulator 103 into a phase information having a phase difference of '0' or 'π' in an electric field.

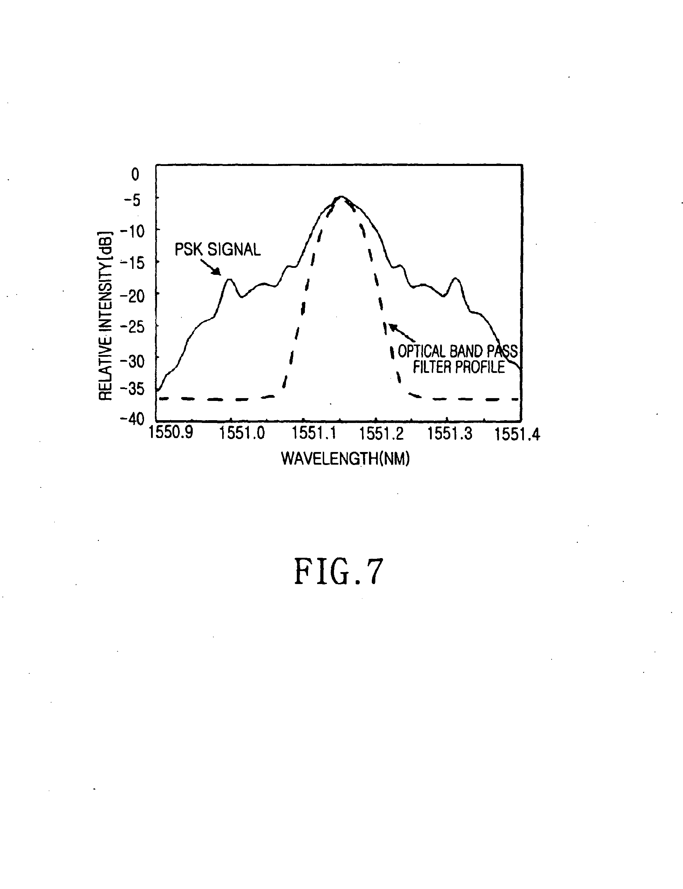

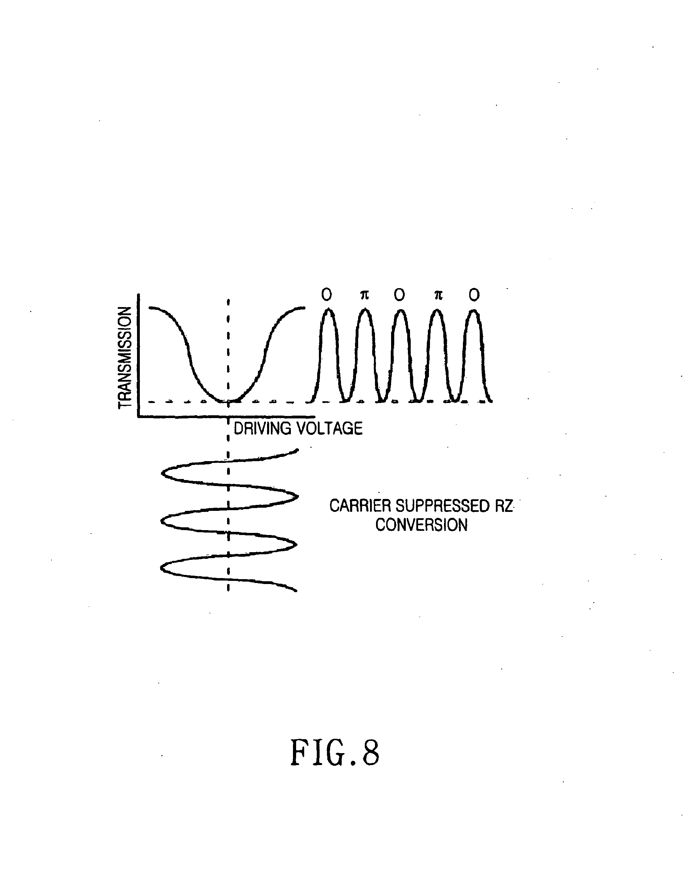

FIG. 7 shows the result obtained by filtering the phase-modulated signal by the optical band pass filter 104.The optical signal phase-modulated by the optical phase modulator 103 passes through the optical band pass filter 104 having a bit rate of 0.7/T. The optical band pass filter 104 filters the optical signal to eliminate other portions but the portion indicated by the broken line in the graph shown in FIG. 8.

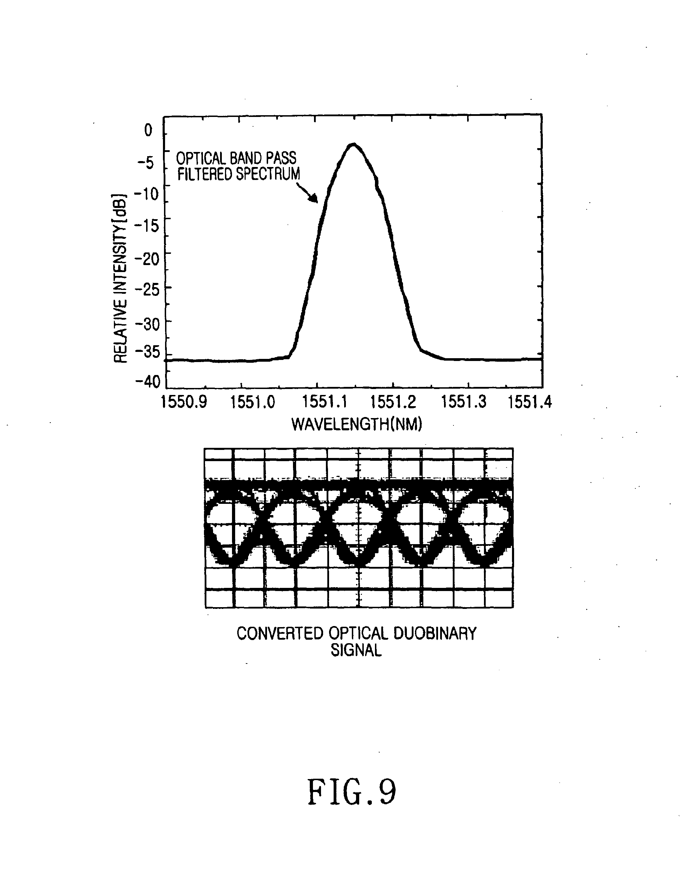

The optical signal having passed through the optical band pass filter 104 is converted to the duobinary signal as shown in FIG 9. The converted duobinary signal is inputted to the chirp-free Mach-Zehnder modulator 201 of the carrier suppressed RZ section 200, so that it can be converted to a DCS-RZ signal.

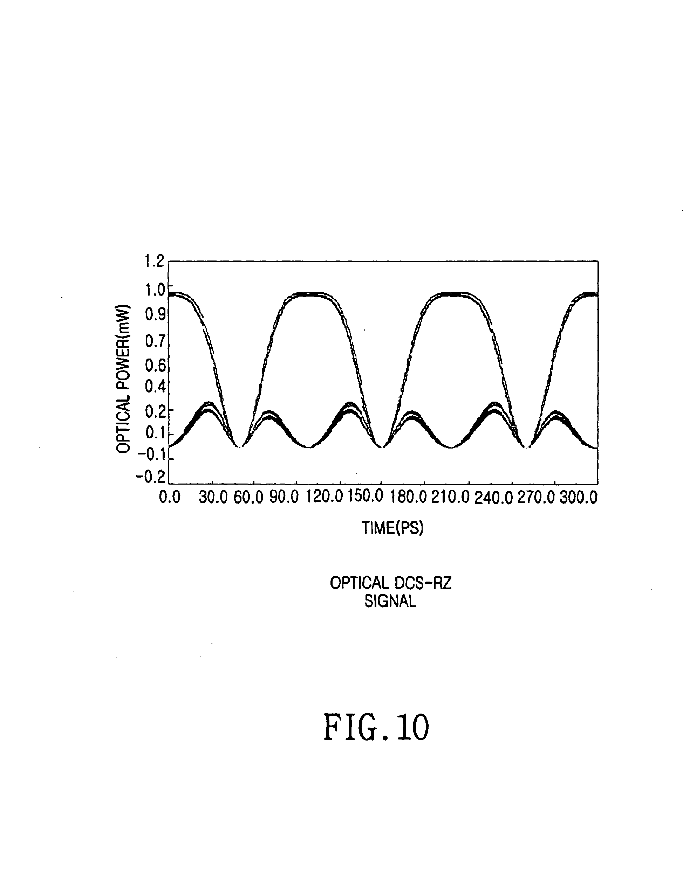

In general, in order to convert an NRZ signal to an RZ signal, a clock signal having a cycle, which is typically half or two times of the bit-rate, is applied to an intensity modulator to modulate an incident NRZ signal to the RZ signal. However, in the present invention, as shown in FIG 4, the duobinary signal outputted from the optical band pass filter 104 is applied to the chirp-free Mach-Zehnder modulator 201, and a clock signal with 2T at a null point of a delivery curve is applied to the chirp-free Mach-Zehnder modulator 201, so as to generate a carrier suppressed RZ signal. Graphically, the converted duobinary optical signal is outputted in the form of the DCS-RZ signal as shown in FIG 10 from the carrier suppressed RZ section 200.

As described above, the present invention provides an optical transmission system using an optical phase modulator, which has no dependency of the transmission quality on the filtering characteristic and the bit pattern, and can remarkably improve the non-linearity and dispersion characteristics of the NRZ transmission during a high-speed WDM transmission of more than 10 Gbps.

In addition, the present invention provides a duobinary carrier suppressed, return-to-zero (DCS-RZ) generating transmitter using an optical phase modulator, which is simpler than the conventional duobinary transmitter, and can overcome limitation in the transmission quality caused by the electric low-pass-filter, thereby realizing an effective high-speed high-density WDM transmission node.

Furthermore, the DCS-RZ generating transmitter according to the present invention may be employed in optical transponders, optical transmitters, optical transceivers and WDM optical transmission systems, SONET/SDH, Ethernet transmission systems, etc.

## Claims

1. An optical transmission system, comprising:
a duobinary modulating section (100) for receiving a carrier and NRZ data, for modulating phases of the carrier and the NRZ data, and for filtering the carrier and the NRZ data, so as to output a duobinary NRZ signal; and,
a carrier suppressed RZ section (200) in which the duobinary NRZ signal from the duobinary modulating section (100) is inputted and a clock signal having a cycle of 2T is applied to a modulator (201), so as to output a carrier suppressed RZ signal,
wherein the duobinary modulating section (100) comprises:
a differential precoder (101) for encoding the NRZ data;
an optical phase modulator (103) for amplifying the NRZ data, which have been encoded in the differential precoder (101), to convert the NRZ data into an optical signal having an optical phase information with a predetermined phase difference; and,
an optical band pass filter (104) for filtering the phase-modulated optical signal with a bandwidth corresponding to a bit rate of 0.7/T, which has been phase-modulated in the optical phase modulator, to output a duobinary signal.

2. The optical transmission system of Claim 1, wherein positions of the duobinary modulating section (100) and the carrier suppressed RZ section (200) can be interchanged.

3. The optical transmission system of Claim 1, wherein characteristics of the phase modulator can be selectively adjusted by adjusting a modulation index, which indicates a degree of phase modulation.

4. The optical transmission system of Claim 1, wherein the carrier suppressed RZ section (200) comprises a chirp-free Mach-Zehnder modulator (201) for receiving the duobinary NRZ signal from the duobinary modulating section (100) and a clock signal with a predetermined cycle at a null point of a delivery curve, so as to generate a carrier suppressed RZ signal.

## Patentansprüche

1. Optisches Übertragungssystem umfassend:
einen duobinären Modulationsabschnitt (100) zum Empfangen von Träger- und Non-Retum-to-Zero (NRZ) -Daten, zum Modulieren der Phasen der Träger- und der NRZ-Daten, und zum Filtern der Träger- und der NRZ-Daten, um so ein duobinäres NRZ-Signal auszugeben; und
einen trägerentstörten Retum-to-Zero (RZ)-Abschnitt (200), in welchen das von dem duobinären Modulationsabschnitt (100) ausgegebene duobinäre NRZ-Signal eingegeben und ein Taktsignal mit einem Takt von 2T an einem Modulator (201) angelegt wird, um so ein trägerentstörtes RZ-Signal auszugeben,
wobei der duobinäre Modulationsabschnitt (100) umfasst:
einen Differentialprecoder (101) zum Verschlüsseln der NRZ-Daten;
einen optischen Phasenmodulator (103) zum Verstärken der NRZ-Daten, welche in dem Differentialprecoder (101) verschlüsselt wurden, um die NRZ-Daten in ein optisches Signal mit einer optischen Phaseninformation mit einem vorbestimmten Phasenunterschied zu konvertieren; und,
einen optischen Bandpassfilter (104) zum Filtern des phasenmodulierten optischen Signals mit einer zu einer Bitrate von 0,7/T korrespondierenden Bandweite, um ein duobinäres Signal auszugeben, wobei das phasenmodulierte optische Signal in dem optischen Phasenmodulator phasenmoduliert wurde.

2. Optisches Übertragungssystem nach Anspruch 1, wobei die Positionen des duobinären Modulationsabschnittes (100) und des trägerentstörten RZ-Abschnittes (200) austauschbar sind.

3. Optisches Übertragungssystem nach Anspruch 1, wobei die Eigenschaften des Phasenmodulators durch Einstellen eines einen Phasenmodulationsgrad angebenden Modulationsindizes wahlweise einstellbar sind.

4. Optisches Übertragungssystem nach Anspruch 1, wobei der trägerentstörte RZ-Abschnitt (200) einen chirpsignalfreien Mach-Zehnder-Modulator (201) zum Empfangen des duobinären NRZ-Signals von dem duobinären Modulationsabschnitt (100) und eines Taktsignals mit einem vorbestimmten Takt an einem Nullpunkt einer Bezugskurve umfasst, um so ein trägerentstörtes RZ-Signal zu generieren.

## Revendications

1. Système de transmission optique comprenant :
une section de modulation duobinaire (100) destinée à recevoir une porteuse et des données de non-retour à zéro, destinée à moduler les phases de la porteuse et des données de non-retour à zéro et destinée à filtrer la porteuse et les données de non-retour à zéro, de manière à fournir en sortie un signal de non-retour à zéro duobinaire, et
une section de retour à zéro à porteuse supprimée (200), dans laquelle le signal de non-retour à zéro duobinaire provenant de la section de modulation duobinaire (100) est reçu en entrée et un signal d'horloge ayant un cycle 2T est appliqué à un modulateur (201) de manière à fournir en sortie un signal de retour à zéro à porteuse supprimée,
où la section de modulation duobinaire (100) comprend :
un module de précodage différentiel (101) destiné à coder les données de non-retour à zéro,
un modulateur de phase optique (103) destiné à amplifier les données de non-retour à zéro, qui ont été codées dans le module de précodage différentiel (101) pour convertir les données de non-retour à zéro en un signal optique comportant une information de phase optique avec une différence de phase prédéterminée, et
un filtre passe-bande optique (104) destiné à filtrer le signal optique modulé en phase ayant une bande passante correspondant à un débit binaire de 0,7/T, qui a fait l'objet d'une modulation de phase par le modulateur de phase optique, afin de fournir en sortie un signal duobinaire.

2. Système de transmission optique selon la revendication 1, dans lequel les positions de la section de modulation duobinaire (100) et de la section de retour à zéro à porteuse supprimée (200) peuvent être interchangées.

3. Système de transmission optique selon la revendication 1, dans lequel les caractéristiques du modulateur de phase peuvent être sélectivement réglées en réglant un indice de modulation, qui indique un degré de modulation de phase.

4. Système de transmission optique selon la revendication 1, dans lequel la section de retour à zéro à porteuse supprimée (200) comprend un modulateur de Mach-Zender exempt d'ondulations (201) destiné à recevoir le signal de non-retour à zéro duobinaire de la section de modulation duobinaire (100) et un signal d'horloge présentant un cycle prédéterminé à un point zéro d'une courbe de délivrance, de manière à générer un signal à porteuse supprimée.
